# FASCICULE DE BREVET EUROPEEN

(11) **EP 3 769 504 B1**
(45) Date de publication et mention de la délivrance du brevet: **15.12.2021**
(21) Numéro de dépôt: 19709971.6
(22) Date de dépôt: 15.03.2019
(51) Int. Cl.: H04M 11/04, H04M 1/72424, G08B 21/02, G08B 21/04, G08B 25/00, G08B 25/01

(54) **METHODE DE GESTION DE L'ASSISTANCE A UNE PERSONNE EN REPONSE A L'EMISSION D'UNE ALERTE**
VERFAHREN ZUR VERWALTUNG DER UNTERSTÜTZUNG EINER PERSON ALS REAKTION AUF DAS AUSSENDEN EINES ALARMS
METHOD FOR MANAGING ASSISTANCE TO A PERSON IN RESPONSE TO THE EMISSION OF AN ALARM

(30) Priorité: 20.03.2018 FR 1870311
(43) Date de publication de la demande: 27.01.2021
(73) Titulaire: Hareau, 75272 Paris Cedex 06 (FR)
(72) Inventeur: ROUSSEAU, Ferdinand, 75015 PARIS (FR)
(74) Mandataire: Pichon, Julien
(86) Numéro de dépôt international: PCT/EP2019/056597
(87) Numéro de publication internationale: WO 2019/179898

(56) Documents cités:
- US-A1- 2012 295 573
- US-A1- 2016 104 368

## Description

### DOMAINE

Le domaine de l'invention se rapporte à celui des dispositifs permettant à une personne d'obtenir une assistance auprès d'une communauté d'utilisateurs ou d'un service d'assistance dédié. Plus particulièrement, le domaine de l'invention se rapporte aux domaines des procédés de gestion de l'assistance à une personne ayant sollicité une aide par l'émission d'un message SOS à partir d'un équipement mobile.

### ETAT DE L'ART

Il existe des méthodes permettant à un groupe d'individus de porter une assistance à une personne ayant sollicité de l'aide par l'intermédiaire d'un équipement électronique mobile. De tels systèmes existent par exemple pour permettre à une personne âgée de contacter son réseau proche afin de les avertir d'un danger.

C'est le cas par exemple de méthodes permettant de générer une alerte auprès de services d'assistance public ou privé permettant d'avertir de l'imminence d'un danger ou d'un accident. Une telle méthode est décrite dans le document de brevet US2008214142. Un tel système peut être utilisé à partir d'un téléphone portable par exemple.

Avec l'émergence des réseaux sociaux et des outils permettant de définir des services auprès de communautés, certains services d'assistance permettent de générer des messages d'urgence auprès de communautés. C'est le cas des systèmes décrits dans les documents US 7 574 194 B2 ou même auprès d'un ensemble d'utilisateurs dans le voisinage de l'appel d'urgence comme cela est décrit dans le document CN 107 071 160 A. Le document US 2012/295573 A1 décrit un terminal gardien initiant un appel d'urgence est dirigé vers une pluralité de terminaux gardiens (terminaux sans fil) par l'intermédiaire d'un serveur de service d'urgence. Le serveur est capable d'extraire une liste de contacts pour le terminal appelant sur la base de son identification d'appelant. Les notifications aux terminaux de garde concernant l'état d'un appel en cours ou l'emplacement des terminaux sont envoyées par le serveur pendant un appel téléphonique entre le terminal de garde et l'un des terminaux de garde (répondant).

Un des enjeux majeurs est de pouvoir améliorer la rapidité de l'action auprès d'une personne en danger et de permettre de coordonner l'assistance apportée.

Or les méthodes actuelles ne permettent pas toujours de bien coordonner l'assistance successivement à l'émission de l'appel. Il peut arriver, lorsqu'un individu de la communauté sollicitée répond à un appel d'urgence, que la personne contactée soit dans l'incapacité de résoudre le problème. Il est alors nécessaire de relayer la demande d'assistance en apportant des précisions ou en s'adressant à des individus en particulier.

La solution décrite dans le document US 7 574 194 B2 propose d'augmenter la description de la situation rencontrée. Mais cette situation ne peut pas toujours être bien renseignée notamment parce que cette description demande une lucidité et un temps que la personne ne peut être en mesure de fournir compte tenu de la situation de danger ou d'accident.

Il existe donc un besoin de définir une solution permettant de contacter un réseau de personnes susceptibles d'aider une personne ayant émis un appel d'urgence tout en apportant une information enrichie sur le suivi de l'assistance d'une personne.

### RESUME DE L'INVENTION

Le procédé de l'invention permet de résoudre les problèmes précités.

Selon un premier aspect l'invention concerne une méthode de gestion de l'assistance à une personne en réponse à l'émission d'une alerte comportant :
▪ Émission d'une alerte SOS à partir d'un premier équipement mobile d'un premier utilisateur au moyen d'une interface sans fil auprès d'un premier ensemble de terminaux d'une pluralité d'utilisateurs ayant chacun un identifiant d'appel, les identifiants d'appel étant enregistrés dans une mémoire du premier équipement électronique mobile ou d'un équipement distant ;
▪ Établissement d'une première communication bidirectionnelle entre le premier équipement et un terminal donné du premier ensemble d'un utilisateur donné, appelé « utilisateur-assistant » ;
▪ Génération automatique d'une pluralité de premières notifications auprès d'un sous-ensemble de terminaux du premier ensemble, chacune des premières notifications comportant au moins une donnée identifiant l'utilisateur-assistant ;
▪ Génération automatique d'une pluralité de secondes notifications auprès des terminaux du second sous-ensemble par une action de l'utilisateur-assistant ou du premier utilisateur, chaque seconde notification comportant un statut relatif au traitement de l'alerte par l'utilisateur-assistant, au moins une seconde notification étant préenregistrée et proposée à l'un ou à l'autre du premier utilisateur ou de l'utilisateur assistant.

Un avantage est de permettre de coordonner l'assistance apportée à un individu ayant émis un SOS, notamment en tenant informé automatiquement les autres utilisateurs de la communauté ayant reçu le SOS du statut de la réponse apportée par l'utilisateur ayant répondu à l'appel SOS.

Selon un mode de réalisation, une liste de notifications préenregistrées sont présentées pendant la communication au moyen d'une interface interactive.

Selon un mode de réalisation, l'émission de l'alerte SOS est générée consécutivement à au moins l'un des événements de la liste suivante :
▪ Une pression au moins pendant une durée prédéfinie sur une interface de commande du premier équipement ;
▪ Une détection d'une accélération dépassant un seuil prédéfini, ladite accélération étant acquise d'un accéléromètre agencé au sein du premier équipement ;
▪ Une détection d'une séquence d'accélération ayant un minimum de similitude avec un profil d'accélération sur une période prédéfini, ladite séquence d'accélération étant acquise d'un accéléromètre agencé au sein du premier équipement.

Un avantage est de générer des messages SOS automatiquement lorsqu'un cas de figure correspondant à un danger ou un accident est détecté par l'équipement utilisateur grâce à au moins un capteur.

Selon un mode de réalisation, l'émission de l'alerte SOS est générée à partir d'un protocole de communication de faible débit de type GSM, GPRS, LTE-M ou NB-IOT. Un avantage est de proposer un procédé adapté à un équipement peu cher, simple et comportant un minimum de composants.

Selon un mode de réalisation, la première communication bidirectionnelle est établie consécutivement à la validation d'une commande d'acceptation sur un terminal donné de l'utilisateur-assistant de la pluralité d'utilisateurs. Un avantage est de permettre d'établir une communication en un simple geste d'acceptation telle qu'une commande sur une interface utilisateur.

Selon un mode de réalisation, la première communication bidirectionnelle est automatiquement établie consécutivement à une demande d'appel provenant du terminal donné de l'utilisateur assistant. Un avantage est de générer automatiquement du point de vue de l'individu en détresse une proposition de réponse d'un utilisateur de la communauté.

Selon un mode de réalisation, la première communication bidirectionnelle est automatiquement établie consécutivement à une demande d'appel provenant du premier équipement consécutivement à la réception d'une notification comportant une information identifiant l'utilisateur-assistant ayant émis une commande d'acceptation. Un avantage est de permettre à l'individu de sélectionner une aide adaptée à la situation par exemple en acceptant ou refusant à son tour la réponse d'un utilisateur.

Selon un mode de réalisation, la première notification est automatiquement émise consécutivement à l'établissement de la première communication bidirectionnelle depuis :
▪ le premier équipement, ou ;
▪ le terminal donné ayant validé la commande d'acceptation ou ;
▪ un serveur de données comportant une information d'identification des utilisateurs du second ensemble.

Selon un mode de réalisation, l'alerte SOS comporte une information identifiant le premier utilisateur et une position géographique du premier équipement.

Selon un mode de réalisation, la première notification comporte une position géographique de l'utilisateur assistant. Un avantage est de tenir informé les autres utilisateurs du suivi d'appel de la réponse apportée. Notamment, l'identité de l'utilisateur assistant est communiqué, ce qui permet à chacun de ne pas générer des appels parasites à ce moment auprès de l'individu ayant émis le SOS.

Selon un mode de réalisation, la seconde notification comporte une durée d'appel et un indicateur de résolution. Un avantage est de délivrer un maximum d'information à la communauté afin de se faire une idée de la situation et de l'aide apportée. Chaque élément communiqué permet à chacun de se faire un avis de la situation sans générer des appels inutiles de prise d'information.

Selon un mode de réalisation, lorsque la première communication bidirectionnelle est interrompue, une demande d'établissement d'une nouvelle communication est automatiquement engagée par le premier équipement ou par le terminal donné de l'utilisateur-assistant.

Selon un mode de réalisation, lorsqu'aucune commande d'acceptation n'a été établie dans une période de temps prédéfinie :
▪ un nouveau message SOS est émis au sein du premier ensemble ;
▪ un message est émis vers un centre d'appels prédéfini.

Un avantage est d'apporter une solution de replis au premier individu de manière automatique lorsqu'aucune commande d'acceptation n'est spontanément validée suite à l'émission du premier SOS.

Selon un mode de réalisation, l'utilisateur-assistant peut, à partir d'une commande prédéfinie, transmettre une consigne entrainant l'établissement d'une seconde communication bidirectionnelle entre le premier utilisateur et un second utilisateur donné. Selon un mode de réalisation, l'utilisateur-assistant peut, à partir d'une commande prédéfinie, engager l'établissement d'une seconde communication bidirectionnelle entre le premier utilisateur et un second utilisateur donné. Un avantage est de déterminer le plus rapidement possible la meilleure solution pour répondre au SOS.

Selon un autre aspect, l'invention concerne un produit programme d'ordinateur comportant un calculateur et une mémoire pour la mise en œuvre des étapes du procédé se rapportant au premier équipement. Le programme comprend des instructions de code de programme exécutées sur un ordinateur pour la mise en œuvre des étapes du procédé de l'invention se rapportant au premier équipement utilisateur.

Selon un autre aspect, l'invention concerne un produit programme d'ordinateur comportant un calculateur et une mémoire pour la mise en œuvre des étapes du procédé de l'invention se rapportant à un terminal établissant la première communication. Le programme comprend des instructions de code de programme exécutées sur un ordinateur pour la mise en œuvre des étapes du procédé de l'invention se rapportant à un terminal T₃ établissant la première communication et/ou celui émettant le message d'alerte. Un avantage est de permettre de télécharger un logiciel à distance sur un équipement mobile afin de réaliser le procédé de l'invention.

Selon un autre aspect, l'invention concerne un équipement électronique mobile comportant une interface de commande comportant un actionneur par lequel la génération d'une commande entraine l'émission d'un message SOS à destination d'un premier ensemble d'utilisateurs au moyen d'une interface de communication sans fil, ledit équipement comportant des moyens pour :
▪ établir une première communication bidirectionnelle avec un terminal donné du premier ensemble d'un utilisateur donné, appelé « utilisateur assistant » ;
▪ générer automatiquement une pluralité de premières notifications auprès d'un sous-ensemble de terminaux du premier ensemble, chacune des premières notifications comportant au moins une donnée identifiant l'utilisateur-assistant ;
▪ générer automatiquement une pluralité de secondes notifications auprès des terminaux du second sous-ensemble par une action de l'utilisateur-assistant ou du premier utilisateur, chaque seconde notification comportant un statut relatif au traitement de l'alerte par l'utilisateur-assistant, les secondes notifications étant des notifications préenregistrées et proposées à l'un ou à l'autre du premier utilisateur ou de l'utilisateur assistent.

Selon un mode de réalisation, le premier équipement comporte des moyens pour décoder l'identifiant d'appel ou l'identité de l'utilisateur assistant afin de générer automatiquement une notification aux autres utilisateurs, ladite notification comportant une information relative à l'identité de l'utilisateur assistant ou de son identifiant d'appel.

Selon un mode de réalisation, l'équipement comporte des moyens pour mettre en œuvre les étapes du procédé de l'invention.

### BREVE DESCRIPTION DES FIGURES

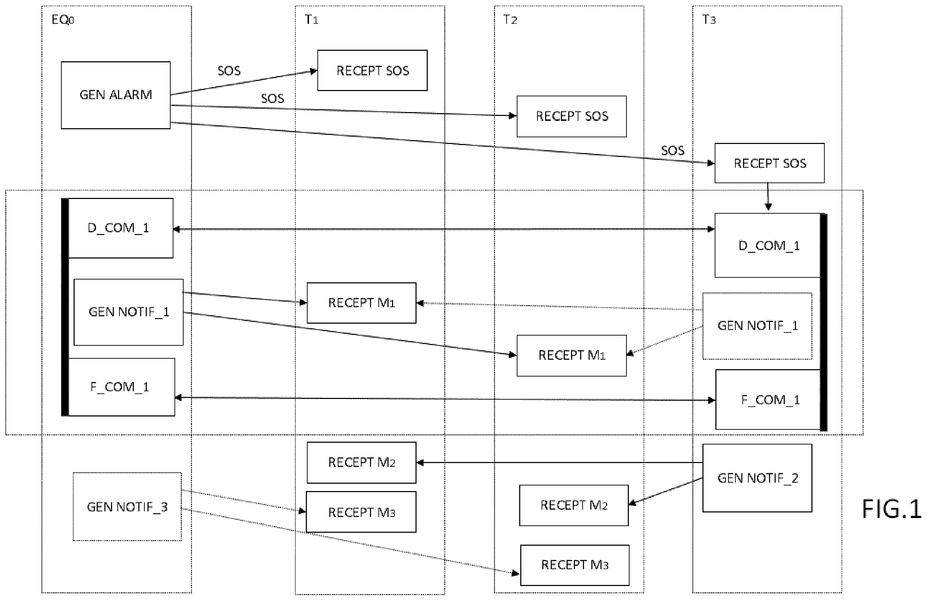

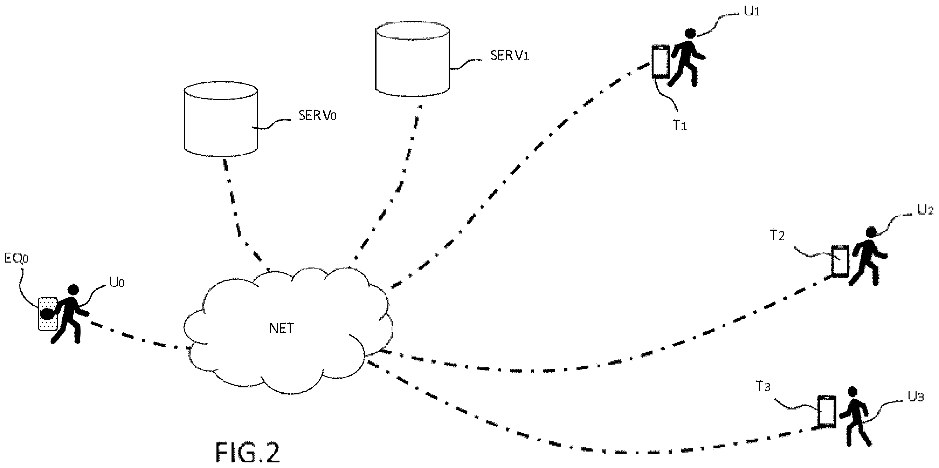

D'autres caractéristiques et avantages de l'invention ressortiront à la lecture de la description détaillée qui suit, en référence aux figures annexées, qui illustrent :
▪ figure 1 : un exemple d'une séquence d'échange de messages selon le procédé de l'invention ;
▪ figure 2 : un cas de figure représentant un individu comportant un équipement selon l'invention ayant émis un message SOS auprès d'une communauté d'utilisateurs.

### DESCRIPTION

### Dispositif

L'invention se rapporte à un dispositif et à un procédé. Le dispositif est désigné comme un équipement électronique mobile. Il comprend à minima un calculateur, une mémoire, une interface de commande, une interface de communication et une batterie ou une source d'énergie. Selon un mode de réalisation, l'interface de communication est une interface 2G, GSM, GPRS, 3G, LTE-M, NB-IOT, Sigfox, LoRa, 5G. Un intérêt est de définir un dispositif de faible coût destiné à émettre un signal d'urgence. Une liaison sans fil faible débit suffit à réaliser les fonctions minimales de communication. Toutefois, l'équipement de l'invention peut comprendre une interface de communication large bande de type 4G ou Wifi ou tout autre protocole de communication sans fil.

Selon un mode de réalisation, l'équipement de l'invention est simplifié, il comporte un minimum de composants et de fonctionnalités. En effet, l'équipement de l'invention permet, par exemple, à une personne âgée d'émettre, en cas d'urgence, un signal SOS à une communauté de personnes dont des amis, des voisins ou de la famille ou encore toute autre connaissance.

Selon un exemple de réalisation, l'interface de commande de l'équipement de l'invention est un bouton dont une pression pendant une durée prédéfinie permet d'émettre un message SOS. L'équipement EQo comporte une interface audio comportant un micro et une sortie casque permettant de délivrer et de transmettre un message audio au moyen d'une communication supportant de la voix. L'équipement comporte tous les éléments radio permettant de moduler, démoduler, décoder et coder des trames en bande de base du signal radio.

Selon un mode de réalisation, l'équipement EQo de l'invention comporte au moins un accéléromètre. Il peut s'agir, par exemple, d'un accéléromètre dit « trois axes » permettant de délivrer trois mesures d'accélération. L'émission du message SOS peut alors être automatiquement déclenchée lorsqu'au moins une composante d'accélération mesurée dépasse un certain seuil. Selon un autre exemple, le message SOS peut être émis automatiquement lorsque l'accélération mesurée est sensiblement proche d'un profil d'accélération prédéfini. A titre d'exemple, un profil d'accélération comportant une première phase d'accélération correspondant à une chute d'une personne suivie d'une seconde phase d'absence d'accélération peut correspondre à une chute d'une personne qui s'est évanouie. Le calculateur et la mémoire de l'équipement EQo permettent d'exploiter les données du capteur d'accélération. Un avantage est de permettre de détecter un immobilisme suspect d'une personne ou une chute d'une personne.

Un système de localisation peut aussi être exploité pour délivrer une position, telle qu'une position GPS. Cette donnée peut permettre de détecter un trajet anormal d'un individu.

Selon un autre exemple, l'équipement comporte un gyroscope permettant d'améliorer la détection de courbes liées une activité anormale pouvant correspondre à un danger imminent ou à un accident.

Lorsqu'une donnée de position ou d'orientation ou d'accélération est considérée sortir d'un champ d'application normal, un message SOS peut automatiquement être émis au sein de la communauté. Le calculateur est alors en mesure d'effectuer des opérations de comparaison, de corrélation ou tout autre calcul permettant de déterminer une singularité des paramètres relative à l'environnement de l'équipement EQo.

Selon un mode de réalisation, l'équipement EQo comporte un capteur de température. Une détection d'une température supérieure à un seuil permet d'engager automatiquement l'émission d'un message SOS à la communauté d'abonnés. Cette option permet d'obtenir une assistance rapidement en cas d'incendie par exemple.

Selon un mode de réalisation, l'équipement si EQo sort d'une zone géographique prédéfinie, l'émission d'un message SOS peut être automatique émis vers la communauté d'utilisateur du service. Cet événement peut être déclenché par une fonction de géorepérage, plus connue sous le terme de « geofencing » dans la terminologie anglosaxonne. La mise en œuvre de cette fonction permet de surveiller à distance la position et le déplacement d'un objet et/ou d'une personne et de prendre des mesures, telles que l'émission automatique d'un message, si la position ou le déplacement s'écarte de certaines valeurs fixées d'avance.

Selon un mode de réalisation, l'équipement EQo est un équipement simplifié comportant un unique bouton. L'interface de commande définie par le bouton est alors préférentiellement mécanique. Une pression pendant un laps de temps donné, permet de générer un message SOS à la communauté. La durée de pression sur le bouton peut être, par exemple, configurée entre 2s et 4s, par exemple pendant 3s.

Selon un mode de réalisation, l'équipement EQo comporte une batterie, par exemple de type Lithium-Ion. La recharge de la batterie peut être effectuée en déposant l'équipement EQo sur un socle alimenté par le secteur. Selon un exemple de réalisation, il comprend une prise de type USB ou toute autre connectique électrique permettant de recharger une batterie.

Selon un mode de réalisation, l'équipement EQo est étanche, c'est-à-dire « waterproof ». Il autorise une immersion dans l'eau dans une profondeur allant jusqu'à quelques mètres. Selon un mode de réalisation, l'équipement EQo est muni d'un capteur d'humidité ou tout type de capteur permettant de déduire que l'équipement EQo est dans un milieu liquide tel que l'eau. Lorsque le capteur détecte une valeur supérieure à un seuil prédéfini indiquant que l'équipement EQo est dans un milieu aqueux, ce qui peut par exemple correspondre à une chute dans une piscine, une génération automatique d'un message SOS est émis vers la communauté d'utilisateurs. Le message émis peut comprendre une information issue de la valeur mesurée par le capteur comme « équipement noyé » afin de renseigner les utilisateurs sur le contexte de l'émission d'urgence.

Selon un mode de réalisation, le message SOS peut être émis que lorsqu'une double condition est remplie. Par exemple la double condition peut correspondre à une détection d'eau suivi d'un immobilisme de l'équipement EQo. Tout autre combinaison d'événement peut être configuré dans l'équipement afin de paramétrer les conditions d'émission d'un message SOS.

### Configuration de l'équipement

Le procédé de l'invention permet à un individu U₀ d'avertir une pluralité d'utilisateurs {Uᵢ}_{i∈ [1;N]} d'un danger imminent ou d'un accident au moyen du premier équipement. La liste des utilisateurs est alors préalablement définie. Ils sont vus comme des abonnés au service du premier individu U₀. Selon un mode de réalisation, le procédé de l'invention comporte une étape de configuration. L'étape de configuration a préalablement permis de définir qui est susceptible de recevoir des messages SOS, soit de messages d'urgence, provenant du premier individu U₀.

A cette fin, selon un premier mode de réalisation, la configuration peut être réalisée directement sur l'équipement du premier individu U₀. Il s'agit alors de définir un carnet d'adresses particulier en mentionnant les numéros d'appel des abonnés au service d'urgence.

Selon un autre mode de réalisation, la configuration peut se faire en accédant à un serveur de données distant SERVo. Un intérêt est de permettre une configuration à distance. Dans ce cas, la configuration peut être réalisée depuis n'importe quel poste informatique connecté ou équipement mobile avec des droits suffisants. Le carnet d'adresses est alors accessible en ligne et peut être modifié lorsqu'un utilisateur possède les droits de lecture, et éventuellement de modifications pour modifier la liste des utilisateurs. La gestion des droits peut être réalisée par exemple au moyen d'un serveur d'authentification dédié (non représenté) ou du même serveur SERVo. Un avantage est qu'une personne de la communauté d'un individu U₀ peut paramétrer son carnet d'adresses. Ce cas de figure peut se produire lorsqu'un enfant ou un petit enfant d'un individu paramètre le compte pour ce dernier.

Selon un mode de réalisation, le procédé de l'invention prend en compte une gestion de droits des différents utilisateurs. À titre d'exemple, un utilisateur U₁ peut avoir les droits pour éditer les nouveaux utilisateurs et configurer les priorités d'appel, notamment des critères à prendre en compte dont par exemple :
- l'émission prioritaire d'un message d'urgence auprès d'une sous-communauté constituée des personnes les plus proches du premier individu ;
- l'émission d'un message d'urgence à toute la communauté dans un second temps, par exemple après un laps de temps écoulé, consécutivement à l'émission d'un premier message d'urgence prioritaire ;
- prise en compte d'au moins une position géographique des utilisateurs dans la génération des messages SOS ;
- hiérarchisation de l'émission des messages d'urgences dans le temps en fonction du critère géographique,
- etc.

### Génération d'un SOS

La figure 1 représente un exemple de réalisation d'une séquence d'échanges de données selon le procédé de l'invention. Un premier individu U₀ comportant un équipement électronique EQ₀ de l'invention émet une alarme SOS. Cette étape est notée GEN_ALARM sur la figure 1. Elle permet l'émission d'un message SOS à destination d'une pluralité d'utilisateurs d'un service accessible par l'intermédiaire d'un terminal.

Les équipements, notés ici T₁, T₂, T₃, sont chacun associé à un utilisateur noté respectivement U₁, U₂, U₃. Les terminaux peuvent être, par exemple, un téléphone intelligent, une tablette, un téléphone portable ou un équipement de communication dédié. Le service peut être par exemple accessible par l'intermédiaire d'une application ou d'un logiciel.

L'exemple de résiliation est décrit ci-après avec 3 « utilisateurs-abonnés » au service d'un individu U₀. Ils sont appelés indifféremment un abonné ou un utilisateur. L'invention s'applique également avec une pluralité d'utilisateurs abonnés au service d'un individu sans limite de nombre. Il est possible de paramétrer le nombre d'utilisateurs-abonnés au moyen d'une interface, par exemple, du premier équipement EQ₀ ou d'un terminal Tᵢ ou encore depuis un ordinateur connecté à un réseau avec les droits d'accès nécessaires le cas échéant.

Lorsque le premier individu émet un message SOS, il est automatiquement émis vers une pluralité de terminaux dont les identifiants d'appels sont connus soit du premier équipement EQ₀ soit d'un serveur SERVo. À titre d'exemple, les identifiants d'appel peuvent être préenregistrés dans une mémoire du premier équipement EQ₀. Lors d'une phase de configuration, les numéros peuvent être par exemple enregistrés dans un répertoire du premier équipement EQ₀.

Selon un autre mode de réalisation, l'équipement EQ₀ émet un message SOS vers un serveur SERV₀ qui peut accéder à un répertoire préconfiguré de sorte à réémettre automatiquement autant de messages SOS que d'utilisateurs Uᵢ ont été préalablement configurés. Un avantage de ce mode de réalisation, est de rendre accessible le répertoire du serveur SERV₀ à au moins un utilisateur U₁, U₂ ou U₃ de sorte qu'il puisse le modifier, ajouter ou retirer une personne. Un intérêt est de permettre de configurer le service pour un proche, par exemple, âgé.

Chaque terminal T₁, T₂, T₃ adressé par le message SOS, s'il est accessible depuis un réseau de communication, reçoit le message SOS. Cette étape est notée RECEPT_SOS dans chaque terminal T₁, T₂ et T₃. Chaque terminal T1, T2, T3 génère alors un indicateur afin de prévenir son utilisateur U₁, U₂, U₃ de l'arrivée d'un message d'urgence. Il peut s'agir d'un indicateur sonore, visuel ou mécanique tel qu'une vibration ou une combinaison d'indicateurs. Dans l'exemple de réalisation de la figure 1, parmi les utilisateurs U₁, U₂, U₃, un utilisateur U₃ accepte de répondre au message SOS en validant une commande d'acceptation notée C_{ACC}.

Dans l'exemple de la figure 1, l'utilisateur U₃ valide le premier la réception du message d'urgence SOS indiquant qu'il prend l'appel. Une première communication bidirectionnelle COM_1 entre le terminal T₃ et le premier équipement EQ₀ démarre alors.

### Prise en compte de la position géographique

Selon un mode de réalisation, la position géographique du premier individu U₀ est émise dans le message SOS.

Selon un mode de réalisation, les positions GPS de la communauté sont partagées et les notifications sont émises préférentiellement selon une séquence temporelle dépendante des positions GPS de chaque utilisateur. Un premier message SOS d'urgence est émis à l'utilisateur le plus proche géographiquement du premier individu U₀ et ainsi de suite jusqu'au dernier message SOS émis à l'utilisateur situé le plus loin de l'individu.

Le calcul des distances peut être effectué entre la position récupérée du premier individu U₀ et la position de chaque utilisateur Uᵢ.

Selon un mode de réalisation, les positions GPS ne sont pas nécessairement partagées et dans ce cas une adresse par défaut est choisie, par exemple l'adresse du lieu de travail ou du domicile d'un utilisateur. Cette dernière peut être préalablement enregistrée et/ou partagée. Selon un autre mode de réalisation, uniquement l'adresse définie par un utilisateur Uᵢ est choisie. Cette option peut être potentiellement recommandée lorsqu'un utilisateur ne souhaite pas partager sa position courante.

Selon un mode de réalisation, les messages d'urgence sont envoyés en cascade suivant un intervalle de temps prédéfini entre chaque émission. Selon un autre mode de réalisation, le second message d'urgence M₀' est émis lorsque le premier message d'urgence M₀ n'a pas abouti à établir une communication COM_1.

Selon un mode de réalisation, si la position géographique d'un utilisateur Uᵢ est dans une zone définie comme hors de portée, le message d'urgence M₀ n'est pas émis à l'utilisateur en question. Dans un autre cas de figure, il est reçu, mais il n'est pas traité, c'est-à-dire que le terminal n'émet pas d'indicateur à l'utilisateur pour le prévenir de l'émission d'un message SOS. Cela permet de ne pas émettre un message d'urgence ou de ne pas notifier de sa réception à un utilisateur situé dans un fuseau horaire trop éloigné du premier individu U₀, par exemple lorsqu'il est en vacances.

### Établissement d'une communication

Selon un premier mode de réalisation, lorsque la validation d'une commande d'acceptation C_{ACC} pour répondre au message SOS est activée, par exemple ici par le terminal T₃, une communication est automatiquement établie entre le premier équipement EQo et le terminal T₃.

Selon un premier exemple, la communication COM_1 est alors initialisée par le terminal T₃. Selon un mode de réalisation, le numéro d'appel du premier équipement EQ₀ est inséré dans le message SOS de sorte que l'analyse du message permette d'extraire le numéro d'appel au moyen d'un calculateur du terminal T₃. Selon un autre exemple, le numéro d'appel est récupéré dans une mémoire du terminal T₃ ou dans le serveur distant SERV₀ à partir d'une information identifiant le premier individu U₀. Dans ce dernier cas de figure, un échange de données peut avoir lieu entre le serveur SERV0 et le terminal T₃ préalablement à l'établissement de la communication COM_1.

Selon un second exemple, une réponse au message SOS est émise par le terminal T₃ sous forme d'un message d'acceptation C_{ACC} de réponse au message SOS. Dans ce cas de figure, la communication COM_1 est automatiquement initiée par l'équipement EQ₀ vers le terminal T₃ ayant accepté le message SOS. Si c'est l'équipement EQ₀ qui initie l'appel, l'établissement de la communication COM_1 peut par exemple être préalablement soumis à une acceptation de l'individu U₀ qui valide la pertinence d'établir une communication avec tel ou tel utilisateur. Lorsqu'une confirmation est attendue par l'individu U₀, selon un mode de réalisation, aux termes d'un laps de temps prédéterminé, une communication est de toute manière engagée automatiquement. Ce cas permet de traiter les cas de figues dans lesquels l'individu U₀ n'est pas en mesure de valider l'identité de l'utilisateur souhaitant établir une communication COM_1.

Selon un mode de réalisation, la communication COM_1 établie est une communication audio, telle qu'une communication téléphonique entre le premier équipement EQ₀ et le terminal T₃. Cette communication permet de faire dialoguer le premier individu U₀ avec le troisième utilisateur U₃.

La figure 1 représente le début D_COM_1 de l'établissement de la communication COM_1. La double flèche représente les deux cas de figure dans lesquels c'est soit le terminal T₃ qui instancie la communication, soit l'équipement EQ₀.

La fin de la communication est annotée F_COM_1. Elle peut être engagée par l'un ou l'autre des utilisateurs U₀ ou U₃. Selon un mode de réalisation, la fin de la communication peut être engagée automatiquement. Cela peut être par exemple le cas suite à une action du premier individu U₀ ou du troisième utilisateur U₃ telle qu'un acquittement de l'incident comme résolu ou un transfert de l'appel vers un autre utilisateur ou encore tout autre action découlant de l'appelé ou de l'appelant.

Pendant la communication, le procédé de l'invention permet de générer automatiquement des notifications auprès des autres utilisateurs. Ces notifications pendant la communication COM_1 sont notées GEN_NOTIF_1. Selon le mode de réalisation, ou bien même la nature des notifications, elles peuvent provenir du premier équipement EQ₀ ou du terminal T₃. Dans la figure 1, une notification M₁ est émise depuis le premier équipement EQ₀ vers les terminaux T₁ et T₂, c'est-à-dire les autres terminaux n'ayant pas établi de communication, mais dont les utilisateurs sont susceptibles d'être intéressés par l'évolution de la prise d'appel par l'utilisateur U₃. Le bloc GEN_NOTIF_1 est également indiqué en pointillé du côté du terminal T3 dans la figure 1 afin d'illustrer la possibilité que les notifications puissent provenir de ce terminal T₃.

Les notifications {Mᵢ} peuvent être émises par l'équipement EQ₀ ou le terminal T₃, mais également directement depuis un serveur distant, par exemple le serveur SERVo qui a permis d'établir d'émettre le message SOS d'urgence et/ou la communication COM_1.

Selon un mode de réalisation, certaines notifications sont directement émises de manière automatique vers les terminaux T₁ et T₂, d'autres sont émises consécutivement à une action de l'utilisateur U₃ ou de du premier individu U₁.

Dans l'exemple de la figure 1, la première notification M₁ comprend une information indiquant l'identité de l'utilisateur U₃ aux autres utilisateurs U₁, U₂ n'ayant pas répondu au message d'urgence M₀ ou ayant répondu après l'utilisateur U₃. Dans un exemple de réalisation, le numéro d'appel de l'utilisateur U₃ est également renseigné dans la notification M₁.

Dans un mode de réalisation, non représenté, d'autres notifications sont émises vers les utilisateurs U₁, U₂, notamment une notification informant du statut de la communication COM_1 parmi une liste de statuts : {prise d'appel ; en cours ; fin de communication, etc.}. Selon un autre mode de réalisation, la position géographique du premier individu U₀ peut être indiquée dans une notification ou encore la position géographique du troisième utilisateur U₃.

Un intérêt est de tenir au courant la communauté d'abonnés afin que ces derniers puissent obtenir un minimum d'informations quant au suivi de la prise d'appel par le troisième utilisateur U₃.

Selon un autre mode de réalisation, les utilisateurs U₁, U₂ de la communauté peuvent recevoir des notifications émises par une action du premier individu U₀ ou du troisième utilisateur U₃. Les notifications peuvent être des messages textes ou des images, elles peuvent également être des notifications préenregistrées et proposées à l'un ou à l'autre du premier individu U₀ ou du troisième utilisateur U₃. À titre d'exemple, une notification préenregistrée peut être « APPEL D'UN MEDECIN REQUISE » ou « DEPLACEMENT D'UN UTILISATEUR REQUIS» ou «ACCIDENT CARDIAQUE », etc.

Ainsi, une liste de notifications peut être présentée pendant la communication COM_1 au moyen d'une interface interactive proposée dans le service. Par exemple, l'utilisateur U₃ peut, pendant qu'il parle au premier individu U₀, générer des notifications selon le cas de figure rencontré.

### Notification de fin d'appel M₂

Le procédé de l'invention comprend une étape à la fin de la communication COM_1 d'émission d'une notification de fin d'appel M₂ permettant de transmettre un statut de résolution de l'alarme aux autres utilisateurs U₁, U₂. Il peut s'agir d'un statut de type « INCIDENT CLOS » avec un champ de description permettant d'indiquer comment l'incident a été clos.

La notification de fin d'appel M₂ peut également comprendre la durée de la communication COM_1.

Selon un mode de réalisation, le troisième utilisateur U₃ peut indiquer aux autres utilisateurs que l'incident n'est pas clos. Dans ce cas de figure, une personne de la communauté peut décider d'engager l'établissement d'une communication avec le premier individu U0. Si ce n'est pas le cas, le procédé de l'invention permet de générer un nouvel envoi de message SOS à la communauté en cas d'échec d'une première tentative de résolution par l'établissent d'une communication COM_1.

Dans un mode de réalisation complémentaire, l'utilisateur U₃ a, en outre, la possibilité de sélectionner un statut proposé par son interface ou de le définir lui-même selon le mode de réalisation.

Selon un mode de réalisation, le premier individu U0 peut lui aussi générer une notification M₃ auprès de la communauté indiquant que le problème est résolu ou qu'il a évolué ou qu'il reste non résolu. Cette étape est notée GEN_NOTIF_3 sur la figure 1.

Lorsque le statut n'est pas clos et que la communication COM_1 est terminée, un second message SOS peut être automatiquement réémis à destination des autres destinataires U₁ et U₂ afin qu'un autre utilisateur puisse répondre à l'appel d'urgence émis par le premier individu.

Selon un autre mode de réalisation, le troisième utilisateur U₃ peut indiquer l'identité d'un utilisateur U₂ devant être joint en priorité pendant l'appel COM_1 ou au moment de terminer l'appel COM_1 dont soit dans une notification de type M₁ (émise pendant l'appel COM_1) ou de type M₂ (émise après l'appel COM_1)

Selon un autre mode de réalisation, le troisième utilisateur U₃ peut générer une notification visant à établir une nouvelle communication entre lui et le premier individu. Ce cas peut se produire lorsque la première communication COM_1 a été interrompue, par exemple, consécutivement à un problème lié à un déficit de couverture réseau ou à un problème de batterie ou encore à tout autre type de problème ayant eu pour conséquence de suspendre la communication COM_1. Le troisième utilisateur U₃ peut donc solliciter en priorité un appel vers le premier équipement EQ₀ avant qu'une nouvelle alarme SOS ne soit réémise par ce dernier.

Selon un mode de réalisation, l'utilisateur U₃ peut directement activer un appel vers un centre d'urgence tel que le SAMU, un service de police ou de pompiers ou tout autre service public ou privé permettant d'assurer un service d'assistance d'urgence. Un tel service peut être assuré au moyen d'un serveur centralisé d'appel SERV₁. Il peut également activer une commande permettant de mettre en relation un tel service avec le premier individu U₀.

La figure 2 représente un individu U₀ comportant un équipement de l'invention EQ₀ et ayant émis un message d'urgence SOS auprès d'une communauté d'utilisateurs U₁, U₂, U₃.

Un serveur SERVo est représenté sur la figure 2. Le serveur SERV₀ comprend des données relatives à chaque utilisateur U₁, U₂, U₃ telles que les numéros d'appel et les identifiants de chaque utilisateur. Le serveur SERVo est utilisé, dans ce cas de figure, pour recevoir le message SOS du premier individu U₀ et pour réémettre vers la communauté d'abonnés du premier individu U₀. Dans ce dernier, le serveur SERV₀ peut être le serveur centralisant les échanges au sein de la communauté d'utilisateurs avec le premier individu U₀ et l'utilisateur assistant U₃. Selon une alternative, les données sont hébergées dans un nuage, également appelé « cloud » dans la terminologie anglo-saxonne, c'est-à-dire sur une pluralité de serveurs de données distants.

Un serveur SERV₁ est représenté, il correspond dans ce cas à un serveur d'un centre d'appel, par exemple un centre d'appel d'urgence. Lorsqu'un utilisateur ne peut pas résoudre le problème, un transfert de l'appel vers un centre d'appel de téléassistance est engagé.

L'invention permet donc d'améliorer la coordination de l'assistance apportée à une personne ayant sollicité une communauté d'utilisateurs ayant souscrit à un service d'assistance auprès de ce dernier. Un avantage est de tenir informé l'ensemble de la communauté de l'évolution de l'assistance lorsqu'un utilisateur a pris contact avec la personne en détresse. Un avantage est de favoriser la rapidité de diffusion d'information au sein de la communauté afin de coordonner par exemple des actions en parallèle. Un autre avantage est de diminuer le nombre d'échange entre les utilisateurs par un système de diffusion instantanée qui permet de mutualiser une synthèse de l'assistance apportée.

Un avantage de la présente invention est donc de permettre de traiter différents types de notifications. Ceci permet un traitement plus adapté à chaque cas d'émission d'alerte.

Un premier type de notification peut être automatiquement généré à partir d'un des terminaux, EQ₀ ou T₃, en utilisant les informations liées à la communication établie entre les deux terminaux. Ainsi, les notifications peuvent être déclenchées automatiquement à partir d'événements liés à la session de communication. Par exemple, l'établissement de la communication, la rupture de la communication, l'établissement d'un mode conférence peuvent être des événements contribuant à générer automatiquement des notifications émises par l'un des deux terminaux à l'ensemble ou le sous-ensemble des terminaux des autres utilisateurs n'ayant pas établis de communication avec l'utilisateur U₀. Ces notifications correspondent à des notifications générées à partir d'événements liés à la communication, elles peuvent être, par exemple, appelées des « notifications de communication ».

Un second type de notification peut être automatiquement généré à partir d'un des terminaux en utilisant les informations liées à une donnée numérique générée depuis un des terminaux, préférentiellement le terminal T₃ de l'utilisateur-assistant U₃. En effet, ce dernier est plus à même de générer des notifications aux autres utilisateurs pour activer un scénario d'aide ou rassurer les autres utilisateurs du traitement de l'alerte.

On considère le cas de figure où l'utilisateur assistant U₃ émet les notifications, un cas analogue pourrait être décrit en considérant que les notifications sont émises depuis le terminal de l'émetteur U₀. Ainsi, les notifications peuvent être déclenchées suite à l'action de l'utilisateur-assistant U₃ pendant la communication. Alternativement ou conjointement, elles peuvent être générées automatiquement en fonction de la survenance de certains événements à partir du terminal T₃.

Dans ce cas de figure, c'est le statut du traitement de l'alerte en tant que telle qui est la source des notifications émises et non le statut de la communication. Ces notifications correspondent à des notifications générées à partir d'événements liés aux données échangées, elles peuvent être par exemple appelées : « notifications de traitement de l'alerte ». Ces notifications sont émises aux autres utilisateurs de la communauté. Elles peuvent être, par exemple, générées à partir d'une icone numérique accessible depuis l'interface d'un terminal. Certaines notifications peuvent, en effet, être préenregistrées et être déclenchées successivement à l'action de l'utilisateur U₃.

Par exemple, le procédé de l'invention permet la génération d'un indicateur de traitement qualifiant l'importance de l'alerte, un indicateur suggérant l'appel d'un médecin, un indicateur suggérant une intervention rapide sur le lieu de présence de l'utilisateur U₀, un indicateur de résolution ou un encore un indicateur suggérant l'établissement d'une communication entre l'utilisateur U₀ et un autre utilisateur-assistant de la communauté, U₁, U₂, dans le cas d'exemple précédemment décrit. D'autres notifications peuvent être réalisées.

Ainsi, on comprend que le procédé de l'invention permet de proposer une solution privilégiant dans un premier temps, l'établissement d'une communication entre le premier répondant à un SOS et son émetteur. Elle permet dans un second temps de définir la qualification du statut de l'alerte et de son suivi au sein d'une communauté d'utilisateurs. L'invention s'affranchit donc d'une solution dans laquelle des niveaux de priorité doivent être préalablement définis au sein d'une communauté et elle s'affranchit d'une solution dans laquelle un équipement tiers organise les communications entre l'émetteur du SOS et un utilisateur-assistant. En effet, ces niveaux de priorité prédéfinis ne peuvent être adaptés à un traitement particulier de l'alerte faute de pouvoir disposer d'une information liée à un statut de traitement de l'alerte, de son niveau d'importance, de sa qualification ou encore d'une action devant être réalisée rapidement au sein de la communauté.

## Revendications

1. Méthode de gestion de l'assistance à une personne en réponse à l'émission d'une alerte comportant :
▪ Émission d'une alerte (SOS) à partir d'un premier équipement mobile (EQ₀) d'un premier utilisateur (U₀) au moyen d'une interface sans fil auprès d'un premier ensemble, ENS1, de terminaux (T1, T2, T3) d'une pluralité d'utilisateurs (U0, U1, U2, U3) ayant chacun un identifiant d'appel, les identifiants d'appel étant enregistrés dans une mémoire du premier équipement électronique mobile (EQ₀) ou d'un équipement distant (SERV₀) ;
▪ Établissement d'une communication bidirectionnelle (COM_1) entre le premier équipement (EQ₀) et un terminal donné (T₃) du premier ensemble, ENS1, d'un utilisateur donné (U₃), appelé « utilisateur-assistant » ;
▪ Génération automatique d'une pluralité de premières notifications (M₁) auprès d'un sous-ensemble, ENS2, de terminaux (T1, T2, T3) premier ensemble, ENS1, chacune des premières notifications (M₁) comportant au moins une donnée identifiant l'utilisateur-assistant (U₃);
▪ Génération automatique d'une pluralité de secondes notifications (M₁, M₂) auprès des terminaux du second sous-ensemble, ENS2, par une action de l'utilisateur-assistant ou du premier utilisateur, chaque seconde notification (M₂) comportant un statut relatif au traitement de l'alerte (SOS) par l'utilisateur-assistant (U₃), au moins une seconde notification étant préenregistrée et proposée à l'un ou à l'autre du premier utilisateur ou de l'utilisateur assistant.

2. Méthode selon la revendication 1, **caractérisée en ce qu'**une liste de notifications préenregistrées sont présentées pendant la communication (COM_1) au moyen d'une interface interactive.

3. Méthode selon la revendication 1 ou la revendication 2, **caractérisée en ce que** l'émission de l'alerte (SOS) est générée consécutivement à au moins l'un des événements de la liste suivante :
▪ Une pression au moins pendant une durée prédéfinie sur une interface de commande du premier équipement (EQ₀) ;
▪ Une détection d'une accélération dépassant un seuil prédéfini, ladite accélération étant acquise d'un accéléromètre agencé au sein du premier équipement (EQ₀) ;
▪ Une détection d'une séquence d'accélération ayant un minimum de similitude avec un profil d'accélération sur une période prédéfini, ladite séquence d'accélération étant acquise d'un accéléromètre agencé au sein du premier équipement (EQ₀).

4. Méthode selon l'une quelconque des revendications 1 à 3, **caractérisée en ce que** l'émission de l'alerte (SOS) est générée à partir d'un protocole de communication de faible débit de type GSM, GPRS, LTE-M ou NB-IOT.

5. Méthode selon l'une quelconque des revendications 1 à 4, **caractérisée en ce que** la première communication bidirectionnelle (COM_1) est établie consécutivement à la validation d'une commande d'acceptation, C_{ACC}, sur un terminal donné (T₃) d'un utilisateur de la pluralité d'utilisateurs (U0, U1, U2, U3).

6. Méthode l'une quelconque des revendications 1 à 5, **caractérisée en ce que** la première communication bidirectionnelle (COM_1) est automatiquement établie consécutivement :
▪ soit à une demande d'appel provenant du terminal donné (T₃) de l'utilisateur assistant (U₃) ;
▪ soit à 'une demande d'appel provenant du premier équipement (EQ₀) consécutivement à la réception d'une notification comportant une information identifiant l'utilisateur-assistant (U₃) ayant émis une commande d'acceptation.

7. Méthode l'une quelconque des revendications 1 à 6, **caractérisée en ce que** la première notification (M₁) est automatiquement émise consécutivement à l'établissement de la première communication bidirectionnelle (COM_1) depuis :
▪ le premier équipement (EQ₀), ou ;
▪ le terminal donné (T₃) ayant validé la commande d'acceptation ou ;
▪ un serveur de données (SERV₀) comportant une information d'identification des utilisateurs du second ensemble ENS2.

8. Méthode selon l'une quelconque des revendications 1 à 7, **caractérisée en ce que** :
▪ l'alerte (SOS) comporte une information identifiant le premier utilisateur (U₀) et une position géographique du premier équipement (EQ₀) et/ou ;
▪ la première notification (M₁) comporte une position géographique de l'utilisateur assistant (U₃) et/ou ;
▪ la seconde notification (M₂) comporte une durée d'appel et un indicateur de résolution.

9. Méthode selon l'une quelconque des revendications 1 à 8, **caractérisée en ce que** lorsqu'aucune commande d'acceptation, C_{ACC}, n'a été établie
dans une période de temps prédéfinie, T_{ACC}:
▪ un nouveau message (SOS) est émis au sein du premier ensemble ENS1 ;
▪ un message est émis vers un centre d'appels prédéfini (SERV₁).

10. Méthode selon l'une quelconque des revendications 1 à 9, **caractérisée en ce que** l'utilisateur donné (U₃) peut, à partir d'une commande prédéfinie, transmettre une consigne entrainant l'établissement d'une seconde communication bidirectionnelle (COM_2) entre le premier utilisateur (U₀) et un second utilisateur donné (U₂, U₁).

11. Produit programme d'ordinateur comportant un calculateur et une mémoire pour la mise en œuvre des étapes du procédé de l'une quelconque des revendications 1 à 10 se rapportant au premier équipement (EQ₀).

12. Produit programme d'ordinateur comportant un calculateur et une mémoire pour la mise en œuvre des étapes du procédé de l'une quelconque des revendications 1 à 10 se rapportant à un terminal (T₃) établissant la première communication (COM_1).

13. Équipement électronique mobile (EQ₀) comportant une interface de commande comportant un actionneur par lequel la génération d'une commande entraine l'émission d'un message (SOS) à destination d'un premier ensemble d'utilisateurs, ENS1, au moyen d'une interface de communication sans fil, ledit équipement (EQ₀) comportant des moyens pour :
▪ établir une première communication bidirectionnelle (COM_1) avec un terminal donné (T₃) du premier ensemble, ENS1, d'un utilisateur donné (U₃), appelé « utilisateur assistant » ;
▪ générer automatiquement une pluralité de premières notifications (M₁) auprès d'un sous-ensemble, ENS2, de terminaux (T1, T2, T3) premier ensemble, ENS1, chacune des premières notifications (M₁) comportant au moins une donnée identifiant l'utilisateur-assistant (U₃);
▪ générer automatiquement une pluralité de secondes notifications (M₂) auprès des terminaux du second sous-ensemble, ENS2, par une action de l'utilisateur-assistant ou du premier utilisateur, chaque seconde notification (M₂) comportant un statut relatif au traitement de l'alerte (SOS) par l'utilisateur-assistant (U₃), les secondes notifications étant des notifications préenregistrées et proposées à l'un ou à l'autre du premier utilisateur ou de l'utilisateur assistant.

## Patentansprüche

1. Verfahren zur Verwaltung der Unterstützung einer Person als Reaktion auf das Senden eines Alarms, umfassend:
▪ Senden eines Alarms (SOS) ausgehend von einer ersten mobilen Ausrüstung (EQ₀) eines ersten Nutzers (U₀) mittels einer drahtlosen Schnittstelle einer ersten Gruppe, ENS1, von Terminals (T1, T2, T3) einer Vielzahl von Nutzern (U0, U1, U2, U3), die jeder eine Rufkennung haben, wobei die Rufkennungen in einem Speicher der ersten mobilen elektronischen Ausrüstung (EQo) oder einer entfernten Ausrüstung (SERV₀) gespeichert werden;
▪ Aufbauen einer bidirektionalen Kommunikation (COM_1) zwischen der ersten Ausrüstung (EQ₀) und einem bestimmten Terminal (T₃) der ersten Gruppe, ENS1, eines bestimmten Nutzers (U₃), bezeichnet als "Nutzer-Assistent";
▪ automatisches Erzeugen einer Vielzahl von ersten Benachrichtigungen (M₁) bei einer Teilgruppe, ENS2, von Terminals (T1, T2, T3) der ersten Gruppe, ENS1, wobei jede der ersten Benachrichtigungen (M₁) wenigstens ein Datenelement umfasst, das den Nutzer-Assistenten (U₃) identifiziert;
▪ automatisches Erzeugen einer Vielzahl von zweiten Benachrichtigungen (M₁, M₂) bei Terminals der zweiten Teilgruppe, ENS2, durch eine Betätigung des Nutzer-Assistenten oder des ersten Nutzers, wobei jede zweite Benachrichtigung (M₂) einen Status bezüglich der Verarbeitung des Alarms (SOS) durch den Nutzer-Assistenten (U₃) umfasst, wobei wenigstens eine zweite Benachrichtigung vorab gespeichert wird und dem einen oder dem anderen ersten Nutzer oder Nutzer-Assistenten vorgeschlagen wird.

2. Verfahren gemäß Anspruch 1, **dadurch gekennzeichnet, dass** eine Liste vorab gespeicherter Benachrichtigungen während der Kommunikationen (COM_1) mittels einer interaktiven Schnittstelle präsentiert wird.

3. Verfahren gemäß Anspruch 1 oder Anspruch 2, **dadurch gekennzeichnet, dass** das Senden des Alarms (SOS) im Anschluss an wenigstens eines der Ereignisse der folgenden Liste erzeugt wird:
▪ einen Druck wenigstens während einer vordefinierten Dauer auf eine Befehlsschnittstelle der ersten Ausrüstung (EQ₀);
▪ eine Detektion einer Beschleunigung, die einen vordefinierten Grenzwert überschreitet, wobei die genannte Beschleunigung von einem Beschleunigungsmesser erfasst wird, der innerhalb der ersten Ausrüstung (EQ₀) angeordnet ist;
▪ eine Detektion einer Beschleunigungssequenz mit einem Minimum an Ähnlichkeit mit einem Beschleunigungsprofil über eine vordefinierte Periode, wobei die genannte Beschleunigungssequenz von einem Beschleunigungsmesser erfasst wird, der innerhalb der ersten Ausrüstung (EQ₀) angeordnet ist.

4. Verfahren gemäß irgendeinem der Ansprüche 1 bis 3, **dadurch gekennzeichnet, dass** das Senden des Alarms (SOS) ausgehend von einem Kommunikationsprotokoll mit geringem Durchsatz vom Typ GSM, GPRS, LTE-M oder NB-IOT erzeugt wird.

5. Verfahren gemäß irgendeinem der Ansprüche 1 bis 4, **dadurch gekennzeichnet, dass** die erste bidirektionale Kommunikation (COM 1) im Anschluss an die Validierung eines Annahmebefehls, C_{ACC}, auf einem bestimmten Terminal (T₃) eines Nutzers aus der Vielzahl von Nutzern (U0, U1, U2, U3) aufgebaut wird.

6. Verfahren gemäß irgendeinem der Ansprüche 1 bis 5, **dadurch gekennzeichnet, dass** die erste bidirektionale Kommunikation (COM_1) automatisch aufgebaut wird im Anschluss:
▪ entweder an eine Anrufanfrage, die von dem bestimmten Terminal (T₃) des Nutzer-Assistenten (U₃) stammt;
▪ oder an eine Anrufanfrage, die von der ersten Ausrüstung (EQ₀) stammt, im Anschluss an den Empfang einer Benachrichtigung, die eine Information umfasst, die den Nutzer-Assistenten (U₃) identifiziert, der einen Annahmebefehl gesendet hat.

7. Verfahren gemäß irgendeinem der Ansprüche 1 bis 6, **dadurch gekennzeichnet, dass** die erste Benachrichtigung (M₁) automatisch im Anschluss an den Aufbau der ersten bidirektionalen Kommunikation (COM_1) gesendet wird von:
▪ der ersten Ausrüstung (EQ₀) oder
▪ dem bestimmten Terminal (T₃), das den Annahmebefehl validiert hat, oder
▪ einem Datenserver (SERV₀), umfassend eine Identifikationsinformation der Nutzer der zweiten Gruppe ENS2.

8. Verfahren gemäß irgendeinem der Ansprüche 1 bis 7, **dadurch gekennzeichnet, dass**:
▪ der Alarm (SOS) eine Information umfasst, die den ersten Nutzer (U₀) und eine geographische Position der ersten Ausrüstung (EQ₀) identifiziert, und/oder
▪ die erste Benachrichtigung (M₁) eine geographische Position des Nutzer-Assistenten (U₃) umfasst, und/oder
▪ die zweite Benachrichtigung (M₂) eine Rufdauer und einen Auflösungsindikator umfasst.

9. Verfahren gemäß irgendeinem der Ansprüche 1 bis 8, **dadurch gekennzeichnet, dass**, wenn kein Annahmebefehl, C_{ACC}, in einer vordefinierten Zeitperiode, T_{ACC}, aufgebaut wurde:
▪ eine neue Nachricht (SOS) innerhalb der ersten Gruppe ENS1 gesendet wird;
▪ eine Nachricht zu einem vordefinierten Anrufzentrum (SERV₁) gesendet wird.

10. Verfahren gemäß irgendeinem der Ansprüche 1 bis 9, **dadurch gekennzeichnet, dass** der bestimmte Nutzer (U₃) ausgehend von einem vordefinierten Befehl einen Sollwert übertragen kann, der den Aufbau einer zweiten bidirektionalen Kommunikation (COM_2) zwischen dem ersten Nutzer (U₀) und einem bestimmten zweiten Nutzer (U₂, U₁) nach sich zieht.

11. Computerprogramm-Produkt, umfassend einen Rechner und einen Speicher für die Umsetzung der Schritte des Verfahrens gemäß irgendeinem der Ansprüche 1 bis 10, die sich auf die erste Ausrüstung (EQ₀) beziehen.

12. Computerprogramm-Produkt, umfassend einen Rechner und einen Speicher für die Umsetzung der Schritte des Verfahrens gemäß irgendeinem der Ansprüche 1 bis 10, die sich auf ein Terminal (T₃) beziehen, das die erste Kommunikation (COM_1) aufbaut.

13. Mobile elektronische Ausrüstung (EQ₀), umfassend eine Befehlsschnittstelle, umfassend ein Betätigungselement, durch das das Erzeugen eines Befehls das Senden einer Nachricht (SOS)zu einer ersten Gruppe von Nutzern, ENS1, mittels einer drahtlosen Kommunikationsschnittstelle nach sich zieht, wobei die genannte Ausrüstung (EQ₀) Mittel umfasst zum:
▪ Aufbauen einer ersten bidirektionalen Kommunikation (COM_1) mit einem bestimmten Terminal (T₃) der ersten Gruppe, ENS1, eines bestimmten Nutzers (U₃), bezeichnet als "Nutzer-Assistent";
▪ automatischen Erzeugen einer Vielzahl von ersten Benachrichtigungen (M₁) bei einer Teilgruppe, ENS2, von Terminals (T1, T2, T3) der ersten Gruppe, ENS1, wobei jede der ersten Benachrichtigungen (M₁) wenigstens ein Datenelement umfasst, das den Nutzer-Assistenten (U₃) umfasst;
▪ automatisches Erzeugen einer Vielzahl von zweiten Benachrichtigungen (M₂) bei den Terminals der zweiten Teilgruppe, ENS2, durch eine Betätigung des Nutzer-Assistenten oder des ersten Nutzers, wobei jede zweite Benachrichtigung (M₂) einen Status bezüglich der Verarbeitung des Alarms (SOS) durch den Nutzer-Assistenten (U₃) umfasst, wobei die zweiten Benachrichtigungen vorab gespeichert und dem einen oder dem anderen ersten Nutzer oder Nutzer-Assistenten vorgeschlagen werden.

## Claims

1. Method for managing the assistance to a person in response to the emission of an alert comprising:
▪ Emitting an alert (SOS) from a first mobile equipment (EQ₀) of a first user (U₀) by means of a wireless interface to a first set, ENS₁ of terminals (T1, T2, T3) of a plurality of users (U0, U1, U2, U3) each one having a call identifier, the call identifiers being recorded in a memory of the first mobile electronic equipment (EQ₀) or of a remote equipment (SERV₀);
▪ Establishing of a two-way communication (COM_1) between the first equipment (EQ₀) and a given terminal (T₃) of the first set, ENS₁, of a given user (U₃), called "assisting user";
▪ Automatic generating of a plurality of first notifications (M₁) to a subset, ENS₂, of terminals (T1, T2, T3) of the first set ENS₁, each one of the first notifications (M₁) comprising at least one piece of data identifying the assisting user (U₃);
▪ Automatic generating of a plurality of second notifications (M₁, M₂) to terminals of the second subset, ENS₂, by an action of the assisting user or the first user, each second notification (M₂) comprising a status relative to the processing of the alert (SOS) by the assisting user (U₃), at least one second notification being prerecorded and proposed to one or the other of the first individual or of the assisting user.

2. Method according to claim 1, **characterized in that** a list of prerecorded notifications are presented during the communication (COM_1) by means of an interactive interface.

3. Method according to claim 1 or claim 2, **characterized in that** the emission of the alert (SOS) is generated following at least one of the events of the following list:
▪ A pressing at least for a predefined duration on a control interface of the first equipment (EQ₀);
▪ A detecting of an acceleration exceeding a predefined threshold, said acceleration being acquired from an accelerometer arranged within said first equipment (EQ₀);
▪ A detecting of an acceleration sequence having a minimum of similarity with an acceleration profile over a predefined period, said acceleration sequence being acquired from an accelerometer arranged within the first equipment (EQ₀).

4. Method according to any of claims 1 to 3, **characterized in that** the emission of the alert (SOS) is generated from a low-speed communication protocol of the GSM, GPRS, LTE-M or NB-IOT type.

5. Method according to any of claims 1 to 4, **characterized in that** the first two-way communication (COM_1) is established following the validation of an acceptance command C_{ACC} on a given terminal (T3) of a user of a plurality of users (U0, U1, U2, U3).

6. Method according to any of claims 1 to 5, **characterized in that** the first two-way communication (COM_1) is automatically established following:
▪ either a call request coming from the given terminal (T₃) of the assisting user (U₃);
▪ or a call request coming from the first equipment (EQ₀) following the reception of a notification comprising information that identifies the assisting user (U₃) who emitted an acceptance command.

7. Method according to any of claims 1 to 6, **characterized in that** the first notification (M₁) is automatically emitted following the establishing of the first two-way communication (COM_1) from:
▪ the first equipment (EQ₀), or;
▪ the given terminal (T₃) that validated the acceptance command or;
▪ a data server (SERV₀) comprising information on the identification of the users of the second set, ENS₂.

8. Method according to any of claims 1 to 7, **characterized in that**:
▪ the alert (SOS) comprises information that identifies the first user (U₀) and a geographical position of the first equipment (EQ₀) and/or;
▪ the first notification (M₁) comprises a geographical position of the assisting user (U₃) and/or;
▪ the second notification (M₂) comprises a call duration and a resolution indicator.

9. Method according to any of claims 1 to 8, **characterized in that** when no acceptance command, C_{ACC}, has been established within a predefined period of time, T_{ACC}:
▪ a new message (SOS) is emitted within the first set, ENS₁;
▪ a message is emitted to a predefined call center (SERV₁).

10. Method according to any of claims 1 to 9, **characterized in that** the given user (U₃) can, from a predefined command, transmit an instruction that results in the establishing of a second two-way communication (COM_2) between the first user (U₀) and a second given user (U₂, U₁).

11. Computer program product comprising a calculator and a memory for the implementation of the steps of the method of any of claims 1 to 10 relating to the first equipment (EQ₀).

12. Computer program product comprising a calculator and a memory for the implementation of the steps of the method of any of claims 1 to 11 relating to a terminal (T₃) establishing the first communication (COM_1).

13. Mobile electronic equipment (EQ₀) comprising a control interface comprising an actuator through which the generating of a command results in the emission of a message (SOS) intended for a first set of users, ENS₁, using a wireless communication interface, said equipment (EQ₀) comprising means for:
▪ establishing a first two-way communication (COM_1) with a given terminal (T₃) of the first set, ENS₁, of a given user (U₃), called "assisting user";
▪ automatically generating a plurality of first notifications (M₁) to a subset, ENS₂, of terminals (T1, T2, T3, T4) of the first set, ENS₁, each one of the first notifications (M₁) comprising at least one piece of data identifying the assisting user (U₃);
▪ automatically generating a plurality of second notifications (M₂) to terminals of the second subset, ENS₂, by an action of the assisting user or the first user (U₀), each second notification (M₂) comprising a status relative to the processing of the alert (SOS) by the assisting user (U₃), the second notifications being prerecorded and proposed to one or the other of the first individual U₀ or of the assisting user.
